# EUROPEAN PATENT SPECIFICATION

(11) **EP 2 063 176 B1**
(45) Date of publication and mention of the grant of the patent: **30.09.2015**
(21) Application number: 08169561.1
(22) Date of filing: 20.11.2008
(51) Int. Cl.: F23D 14/22, F23D 14/32, F23M 5/02, C03B 5/235, C03B 7/06

(54) **Oxyburner**
Oxybrenner
Oxybrûleur

(30) Priority: 22.11.2007 EP 07121356
(43) Date of publication of application: 27.05.2009
(73) Proprietor: L'Air Liquide Société Anonyme pour l'Etude et l'Exploitation des Procédés Georges Claude, 75007 Paris (FR)
(72) Inventor: Giang, Son-Ha, 94370 Sucy-en-Brie (FR); Beaudoin, Philippe, 78280 Guyancourt (FR)
(74) Representative: De Vleeschauwer, Natalie Y.L.D.

(56) References cited:
- EP-A- 0 216 698
- EP-A- 0 703 410
- WO-A-98/51966
- FR-A- 2 735 122
- US-A- 3 748 087
- US-A- 3 861 858
- US-A- 5 934 893
- US-B1- 6 471 508

## Description

The present invention relates to oxycombustion processes and oxyburners, and more specifically to oxy-gas burners and their use for heating charges in particular in heating furnaces.

Burners of the type used in heating furnaces generally comprise a refractory block of a specific geometry surrounding the one or more fuel and/or oxidizer injectors.

The burner itself is in turn mounted in an opening or recess in the refractory walls of the furnace, which opening or recess closely matches the geometry of the refractory block.

Traditionally, air is used as the oxidizer for combustion, such air-based combustion processes being known as aerocombustion. In view of increasing restrictions on NOx emissions and other pollutants, there has, in recent years, been a shift towards the use of oxygen or oxygen-enriched air as the oxidizer for combustion. Such a combustion process is known as oxycombustion. The corresponding burners are known as oxyburners.

The use of oxygen or of oxygen enriched air as oxidizer for combustion also enables significant economies in the consumption of combustibles. For example, the switch from air-gaseous fuel combustion to oxygen-gaseous fuel combustion in glass furnace feeders makes it possible to reduce the fuel consumption by about 50%.

However, the properties of oxy-fuel flames are different from the properties of the corresponding air-fuel flames. In particular, the temperature of oxy-fuel flames is significantly higher than the adiabatic temperature of premixed air-fuel flames.

As the temperature of oxy-fuel flames is usually higher than the recommended operation temperature of the refractory materials used in the furnace, the use of oxyburners can in particular lead to rapid or gradual deterioration of these refractory materials due to overheating of the refractory materials, and in particular of the refractory block. This leads to restrictions in the allowable operating range (minimal and maximal power) of the oxyburners and to a higher frequency of maintenance interventions in the furnace, with a corresponding increase in downtime and maintenance costs.

In order to, at least partially, overcome these disadvantages of oxycombustion, new burners have been designed specifically for use in oxycombustion.

Some examples of known burners are briefly described hereafter.

US-B-6,471,508 discloses a specific low-NOx aeroburner for non-symmetrical combustion.

A sidewall of the burner port block defines a frusto-conical section around the central axis of the burner, the sidewall of said section having a predetermined flare angle between 2° and 30°: a fuel conduction positioned coaxial with a line spaced from the central axis of the burner, said fuel conduct being nested within a combustion gas conduct connected to a source of combustion gas such as air or fuel gas. An air conduct defines an air opening on an opposite side of the burner central axis from the fuel opening. Low-NOx combustion is achieved through. the coanda effect.

EP-A-0703410 discloses an oxyburner having a block defining a feed passage having an axis and leading into the narrow end of a burner chamber, said burner chamber having a frusto-conical transition section at its narrow end and a substantially cylindrical section at its wide end. The burner according to EP-A-0703410 can generate improved heat transfer by radiation at low fuel and oxidizer injection velocities.

EP - A - 216 698 discloses a burner assembly for a glass feeder, having a cylindrical canal for supplying a premixture of air and combustible gas, said cylindrical canal terminating inside the feed passage upstream of the narrow end of the burner chamber. The burner assembly furthermore comprises a capilary tube for supplying oxygen which is coaxial with the cylindrical canal, and which terminates between the end of the cylindrical canal and the narrow end of the burner chamber. The burner assembly according to EP-A- 216 698 thus enables oxygen enriched combustion in glass feeders.

US-5934893 or WO. 98/51966 discloses an oxyburner having a block defining a feed passage and a burner chamber comprising a frusto-conical section terminating in the burner wide end opening.

In practice, oxyburners, including their refractory blocks, are of different design and geometry compared to known aeroburners.

The switch from aerocombustion to oxycombustion thus requires the replacement of the existing aeroburners with oxyburners.

In view of the differences in geometry between the oxyburners and the known aeroburners, this replacement also requires adjustments to the refractory walls of the furnace, and in particular to the openings or recesses in which the burners are mounted. This makes the switch from aerocombustion to oxycombustion time consuming, expensive and often irreversible, which at least partially explains why oxycombustion has to date failed to reach its full potential.

The present invention solves the above problem in that it provides a reliable oxyburner having oxidizer and fuel injectors mounted in a refractory block of a type which can also be used for making reliable aeroburners.

The present invention relates to a new oxyburner and its use for heating a charge. It also relates to a method for assembling the new oxyburner, to furnaces, such as glass melting furnaces and feeders, comprising the new oxyburner and their use for heating a charge, as well as to a process for retrofitting a furnace using the oxyburner or the method for assembling same. In the following description of the invention:
■ L is the length of the burner block;
■ Lt is the length of the burner chamber;
■ Ltr is the length of the transition section, if present, of the burner chamber;
■ Lf is the length over which the fuel injector extends into the burner chamber;
■ Lo is the length over which one or more oxidizer injectors extend into the burner chamber;
■ X-X is the axis of the feed passage;
■ d is the diameter of the feed passage immediately upstream of the burner chamber;
■ α is the cone angle of the frusto-conical section of the burner chamber, and
■ β is the angle between the inclined facet, if present, of the outlet face of the block and the axis X-X.

In the description of the invention hereafter, reference is made to the figures which are non-limiting illustrations of the present invention.

Figures 1 and 2 show in longitudinal cross-section two embodiments of the oxuburner according to the invention mounted in an upright wall of a heating furnace.

Figure 3A shows a front view and figure 3B shows a longitudinal cross section of a first example of a refractory block suitable for use in the invention.

Figures 4A and 4B show a front view, respectively a longitudinal cross-section of a second example of a refractory block suitable for use in the present invention.

The oxyburner according to the invention comprises a refractory block 1, a fuel injector 2 and one or more oxidizer injectors 3.

The refractory block has an inlet face 4 on one side and an outlet face 5 on an opposite side. The block defines a feed passage 6 through which fuel and oxidizer is fed and a burner chamber 7 in which a flame is created by combusting the fuel and oxidizer.

The feed passage 6 has an axis X-X and leads into the block 1 from the inlet face 4.

The burner chamber 7 has a surrounding wall 8, a narrow end opening 9 towards the feed passage 6 and a wide end opening 10 situated in the outlet face 5 opposite the narrow end opening 9.

The burner chamber 7 has a length Lt. The length Lt of the burner chamber is the distance between the orthogonal projection onto the axis X-X of the narrow end opening 9 and the point of the orthogonal projection of the wide end opening 10 on the axis X-X furthest away therefrom.

The burner chamber 7 comprises a frusto-conical section 20 terminating in the wide end opening 10 situated in the outlet face 5, said frusto-conical section having a cone axis substantially coinciding with the axis X-X and a cone angle α from 2° to 4°. As illustrated in the figures, the cone angle α is the slope with respect to the axis X-X of the surrounding wall 8 in the frusto-conical section 20.

The feed passage 6 leads into the narrow end opening 9 of the burner chamber 7 and the burner chamber 7 leads out of the block 1 at its wide end opening 10.

The feed passage 6 has an exit diameter d. The exit diameter d is the diameter of the feed passage 6 immediately upstream of the burner chamber 7.

The fuel injector 2 and the one or more oxidizer injectors 3 are mounted in the feed passage 6, so that the fuel injector 2 is surrounded by the one or more oxidizer injectors 3. In this manner, the one or more oxidizer injectors 3 can inject a shrouding oxidizer jet into burner chamber 7 around the fuel jet injected by the fuel injector 2.

According to the invention, the fuel injector 2 extends into the burner chamber 7 over a length Lf, whereby 0≤ Lf ≤0.35 x Lt. The one or more oxidizer injectors 3 extend into the burner chamber 7 over a length Lo, whereby 0≤ Lo ≤ Lf.

When Lf = 0, the fuel injector 2 ends at the end of the feed passage 6 and does not extend into the burner chamber 7.

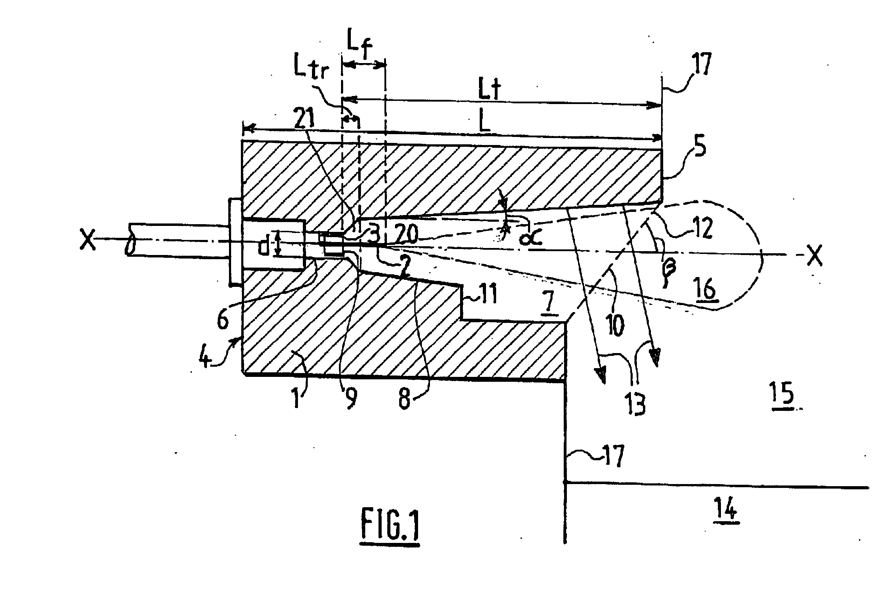

Similarly, when Lo = 0 (as shown in figure 1), the oxidizer injector 3 ends at the end of the feed passage 6 and does not extend into the burner chamber 7.

In particular, as illustrated in the figures, Lf may be greater than 0. In that case the fuel injector 2 extends beyond the feed passage 6 and into the burner chamber 7.

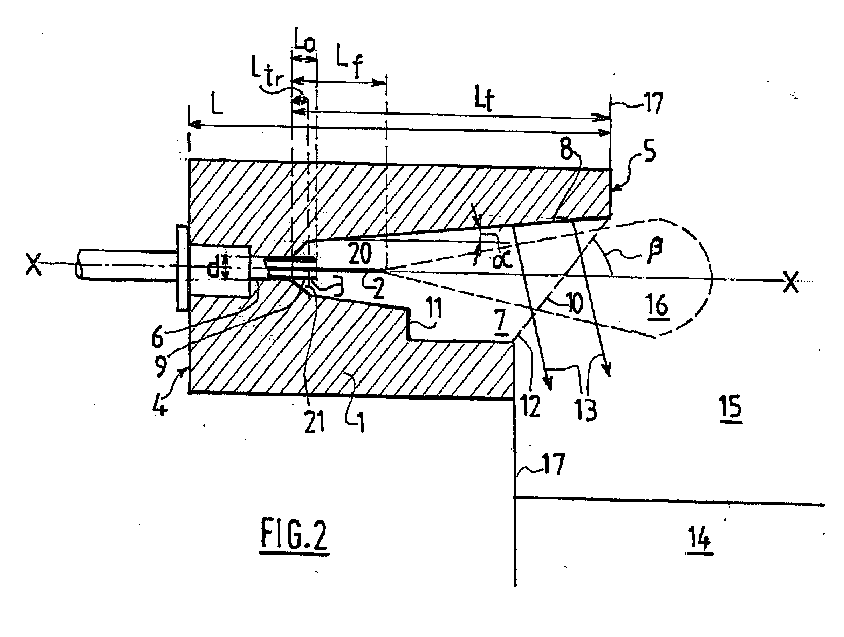

Likewise, as illustrated in figure 2, Lo may be greater than 0, in which case the one or more oxidizer injectors 3 extend beyond the feed passage 6 and into the burner chamber 7.

According to one useful embodiment Lf = Lo. According to an alternative and advantageous embodiment Lf > Lo. It has in particular been observed that when Lf > Lo, the formation of deposits on the one or more oxidizer injectors at or proximate the narrow end opening is reduced or even prevented. The formation of such deposits can, in particular, lead to a deviation of the flame towards surrounding wall 8, which in turn may lead damage to or premature aging of the refractory block. Preferably, Lf ≥ 3 mm.

When Lf is greater than zero, Lf can usefully be smaller than or equal to 0.3 x Lt, preferably Lf ≤ 0.25 x Lt, more preferably Lf ≤ 0.20 x Lt.

When Lo is greater than zero, Lo can advantageously be smaller than or equal to 0.10 x Lt, preferably Lo ≤ 0.05 x Lt.

The length Lt of the burner chamber is typically from 100 mm to 350 mm, preferably 125 mm ≤ Lt ≤ 200 mm. The length L of the burner block, i.e. the distance, measured along axis X-X, from the inlet face to the outlet face or, if the outlet face is inclined, to the far end of the outlet face, is typically from 180 mm to 420 mm, preferably from 200 mm to 410 mm. According to a specific embodiment, the length of the burner block is from 180 mm to 280 mm, and more specifically from 200 mm to 260 mm.

According to an advantageous embodiment, the feed passage 6 has an exit diameter d upstream of the narrow end opening of the burner chamber from 8 mm to 18 mm, preferably 10 mm ≤ d ≤ 17 mm.

As explained above, the fuel injector 2 and the one or more oxidizer injectors 3 are mounted in the feed passage 6, so that the fuel injector 2 is surrounded by the one or more oxidizer injectors 3. This can be achieved through different configurations. For example, the oxyburner may preferably comprise an oxidizer injector 3 which surrounds the fuel injector 2, so that an annular passage for injecting oxidizer into the burner chamber 7 is created. This is the embodiment illustrated in figures 1 and 2. The oxyburner may also comprise a multitude of oxidizer injectors (at least 3, preferably 4, more preferably more than 4) substantially evenly positioned or arranged around the fuel injector, possibly in combination with one or several oxidizer injectors surrounding the fuel injector and creating an annular oxidizer passage in the manner described above.

The burner chamber 7 may include a transition section 21 between the narrow end opening 9 and the frusto-conical section 20. Such a transition section can have different configurations. The transition section is preferably also frusto-conical with a cone angle greater than the cone angle α of the frusto-conical section 20. The length Ltr of the transition section (measured as the distance between the orthogonal projections onto axis X-X) is preferably ≤ 0.1 x Lt.

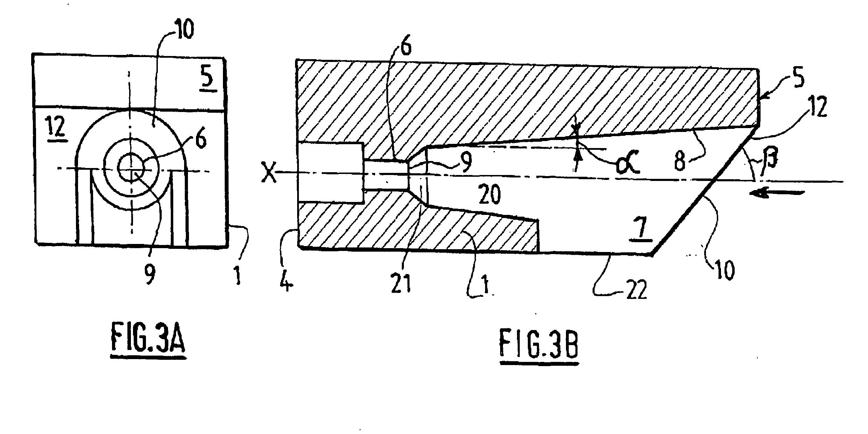

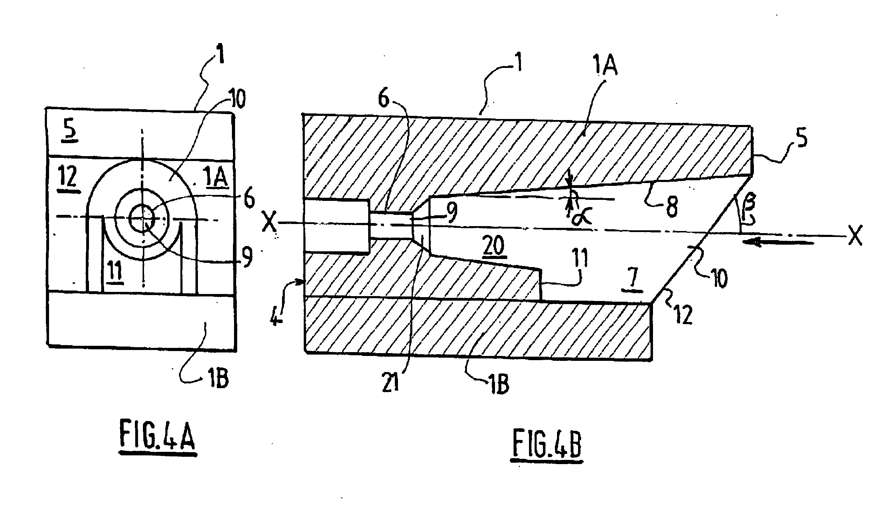

For some applications, the surrounding wall 8 of the burner chamber 7 may comprise at least one section with a stepped surface 11. Such a stepped surface 11 is typically situated in the frusto-conical section 20 of the burner chamber 7. Block 1 may be integrally formed. Alternatively block 1 may be an assembly of more than one refractory element. For example, as shown in figures 4A and 4B, a stepped surface 11 may be obtained by mounting a first refractory element 1A onto a second refractory element 1B. In the embodiment illustrated in figure 4, the first refractory element 1A corresponds essentially to the block 1 as shown in figures 3A and 3B, whereas the second refractory element 1B is a base plate.

The outlet face 5 of the block 1 may furthermore comprise an inclined facet 12 forming an angle β with the axis X-X, whereby β < 90°, preferably 30° ≤ β ≤ 80°, more preferably 40° ≤ β ≤ 60°. (when β = 90°, the outlet face 5 or the facet 12 is perpendicular to axis X-X). When the wide end opening 10 of the burner chamber 7 is situated in this inclined facet 12, heat can, as shown in figures 1 and 2 by arrows 13, be reflected from the longer section of the surrounding wall of the burner chamber, for example towards a charge 14 situated on the side of the oxyburner corresponding to the shorter section of said surrounding wall 8.

According to another option, the wall of the burner chamber 7 can define an open section 22 (i.e. a void in wall 8) through which heat can be radiated, in particular the heat reflected from the wall 8 of the burner chamber 7 opposite the open section. Such an open section 22 is typically situated in the frusto-conical section 20 of the burner chamber 7. As illustrated in figures 3A and 3A, this embodiment may be combined with the inclined facet 12 as described above. These embodiments can, for example, advantageously be used in a feeder, in particular in a feeder of a glass melting furnace.

The above embodiments whereby the outlet face 5 of the block 1 of the oxyburner comprises an inclined facet 12 in which the wide end opening 10 of the burner chamber is situated and/or whereby the surrounding wall 8 comprises an open section are particularly advantageous when the oxyburner is mounted in an upright wall of a furnace or of a feeder for heating a charge situated below the oxyburner.

In use, the fuel injector 2 is connected to a source of a fuel (not shown), typically a source of gaseous fuel. The fuel is advantageously selected from the group comprising: natural gas, methane, propane and butane.

In use, the one or more oxidizer injectors 3 are connected to a source of oxidizer (not shown). As explained in the introduction, in the case of oxycombustion, the oxidizer supplied by the oxidizer oxygen or oxygen enriched air. The oxidizer supplied by the oxidizer source to the one or more oxidizer injectors 3 advantageously has an oxygen content of at least 50 % by volume, preferably of at least 70 % by volume, more preferably of at least 80 % by volume and even more preferably of at least 87 % by volume.

The oxyburner according to the present invention is specifically suited for oxycombustion, and its configuration is adapted to cope with the higher temperatures of the oxy-fuel flame 16, and in particular to the temperatures of oxy-gas flames.

The characteristics of the block and the fuel and oxidizer injectors of the invention are such that during oxycombustion the block is not subjected to excessive deterioration due to heat exposure. Nevertheless, said characteristics still enable the temperature of the surrounding wall of the burner chamber at the wide end opening to be higher than the temperature in the combustion zone 15. In this manner, improved heat radiation from the burner chamber can be obtained, in particular when combined with an inclined facet in the outlet face and/ore an open section in the surrounding wall of the burner chamber.

Even though the block 1 of the oxyburner according to the invention is particularly adapted for oxycombustion, the block is also suitable for use in an aeroburner.

Thus, the invention presents the major advantage of enabling the assembly of an oxyburner using a block 1 which is also suitable for use in an aeroburner or which has even already been in use in an aeroburner.

The invention thus also concerns a method of assembling an oxyburner as described above as well as the oxyburners obtained thereby.

The invention thus covers a method of assembling an oxyburner using a refractory block 1. The refractory block 1 has an inlet face 4 on one side and an outlet face 5 on an opposite side. The block defines a feed passage 6 and a burner chamber 7. The feed passage 6 has an axis X-X and leads into the block 1 from the inlet face 4. The burner chamber 7 has a surrounding wall 8, a narrow end opening 9 and a wide end opening 10 opposite the narrow end opening 9 and situated in the outlet face 5 of block 1. The burner chamber 7 has a length Lt and includes a frusto-conical section 20 terminating in wide end opening 10. The cone axis of the frusto-conical section 20 coincides substantially with the axis X-X. The cone angle α of the frusto-conical section 20 is from 2° to 4°. The feed passage 6 leads into the narrow end opening 9 of the burner chamber 7 and the burner chamber 7 leads out of the block 1 at its wide end opening 10. The feed passage has an exit diameter d.

The assembly method of the invention comprises the steps of mounting a fuel injector 2 in the feed passage 6 and of mounting one or more oxidizer injectors 3 in the feed passage 6, so that the fuel injector 3 extends into the burner chamber 7 over a length Lf, whereby 0 ≤ Lf ≤ 0.35 x Lt, and so that the one or more oxidizer injectors 3 extend into the burner chamber 7 over a length Lo, whereby 0 ≤ Lo ≤ Lf, the fuel injector 2 being furthermore surrounded by the one or more oxidizer injectors 3.

The different optional features described hereabove with respect to the oxyburner also apply to the assembly method of the invention.

As explained above with respect to the oxyburner, when Lf = 0, the fuel injector 2 ends at the end of the feed passage 6 and does not extend into the burner chamber 7 and when Lo = 0, the oxidizer injector 3 ends at the end of the feed passage 6 and does not extend into the burner chamber 7.

Lf may be greater than 0, in which case the fuel injector 2 extends beyond the feed passage 6 and into the burner chamber 7. When Lo is greater than 0 the one or more oxidizer injectors 3 extend beyond the feed passage 6 and into the burner chamber 7. According to one advantageous embodiment Lf = Lo. According to another advantageous embodiment Lf > Lo, and preferably Lf - Lo ≥ 3 mm.

When Lf is greater than zero, Lf can usefully be smaller than or equal to 0.30 x Lt, preferably Lf ≤ 0.25 x Lt, more preferably Lf ≤ 0.20 x Lt.

When Lo is greater than zero, Lo can advantageously be smaller than or equal to 0.10 x Lt, preferably Lo ≤ 0.05 x Lt.

The length Lt of the burner chamber is typically from 100 mm to 350 mm, preferably 125 mm ≤ Lt ≤ 200 mm.

The length L of the burner block, i.e. the distance, measured along axis X-X, from the inlet face to the outlet face or, if the outlet face is inclined, to the far end of the outlet face, is typically from 180 mm to 420 mm, preferably from 200 mm to 410 mm. According to a specific embodiment, the length of the burner block is from 180 mm to 280 mm, and more specifically from 200 mm to 260 mm.

The exit diameter d of the feed passage 6 can usefully vary from 8 mm to 18 mm, preferably 10 mm ≤ d ≤ 17 mm.

The method may comprise mounting an oxidizer injector 3 and a fuel injector 2 into the feed passage 6 so that the oxidizer injector 3 surrounds the fuel injector 2 and an annular passage for injecting oxidizer into the burner chamber 7 is created. The method according to the invention may also include mounting a multitude of oxidizer injectors (at least 3, preferably 4, more preferably more than 4) into the feed passage and positioned around the fuel injector.

The burner chamber 7 may include a transition section 21 as described above.

The surrounding wall 8 of the burner chamber 7 may comprise at least one section with a stepped surface 11, typically situated in the frusto-conical section 20.

The outlet face 5 of the block 1 may furthermore comprise an inclined facet 12 forming an angle β with the axis X-X, whereby β < 90°, preferably 30° ≤ β ≤ 80°, more preferably 40° ≤ β ≤ 60°.

The surrounding wall 8 of the burner chamber 7 can also further define an open section 22 through which heat can be radiated, in particular the heat reflected from the surrounding wall 8 of the burner chamber 7 opposite the open section. The open section 22 is typically situated in the frusto-conical section 20 of the burner chamber 7.

The method may also comprise the step of connecting the fuel injector 2 to a fuel source, preferably a source of gaseous fuel. The fuel is advantageously selected from the group comprising: natural gas, methane, propane and butane. The method may further comprise the step of connecting the one or more oxidizer injectors 3 to an oxidizer source, the oxidizer The oxidizer supplied by the oxidizer source to the one or more oxidizer injectors 3 advantageously has an oxygen content of at least 50 % by volume, preferably of at least 70 % by volume, more preferably of at least 80 % by volume and even more preferably of at least 87 % by volume.

The present invention also relates to furnaces comprising one or more oxyburners according to the invention. The invention relates in particular to glass melting furnaces and glass feeders comprising one or more oxyburners according to the invention.

As the refractory block 1 used for the invention is suitable both for aerocombustion and oxycombustion, the present invention is particularly interesting when used for retrofitting a combustion furnace, in particular when partially or entirely switching from aerocombustion to oxycombustion.

Indeed, when prior to the retrofitting process, the furnace comprises at least one burner, be it an aeroburner or an oxyburner, which comprises a block 1 as used in the present invention, said existing burner can be replaced by an oxyburner according to the invention without the need for time-consuming and highly expensive changes to the recess in the furnace wall 17 in which the existing burner is mounted. It is moreover possible to transform the existing burner into an oxyburner according to the invention, while keeping the existing refractory block 1, using the assembly method according to the invention. Again, this allows the furnace to be retrofitted without having to go through time-consuming and highly expensive changes to the furnace walls 17. In the present context the term "furnace wall" is not limited to vertical or side furnace walls but is instead used to designate any one of the walls defining a heating or combustion zone in a furnace or a feeder, it being understood that the term "furnace wall" includes in particular such upright walls.

The present invention thus also concerns a first process for retrofitting a combustion furnace whereby one or more of the existing burners are replaced with an oxyburner according to the invention as described hereto.

The invention also relates to a further process for retrofitting a combustion furnace using the above-described assembly method. The furnace has refractory walls 17 defining a combustion zone 15 and one or more refractory blocks 1 mounted in said refractory walls 17. At least one refractory block 1 has an inlet face 4 on one side and an outlet face 5 on an opposite side. The outlet face 5 faces the combustion zone 15. As already described above, the block 1 defines a feed passage 6 into the block 1 from the inlet face 4 and a burner chamber 7 having a narrow end opening 9 and an opposite wide end opening 10 in the outlet face 5. The feed passage 6 has an axis X-X. The burner chamber 7 has a surrounding wall 8 and a length Lt. The burner chamber comprises a frusto-conical section 20 terminating in wide end opening 10 and having a cone angle α of 2° to 4° and a cone axis which coincides substantially with axis X-X. The feed passage 6 leads into the narrow end opening 9 of the burner chamber 7 and the burner chamber 7 leads out of the block 1 and into the combustion zone 15 at its wide end opening 10. The process according to the invention comprises assembling an oxyburner in the at least one refractory block 1 using the assembly method of the invention, typically after removing from said refractory block 1 the fuel and oxidizer injectors present before the retrofitting process. The retrofitting process may further include connecting the fuel injector 2 to a fuel source, which fuel is preferably a gaseous fuel and more preferably selected from the group consisting of natural gas, methane, propane and butane. The retrofitting process may also include connecting the one or more oxidizer injectors 3 to an oxidizer source. The oxidizer supplied to the one or more oxidizer injectors 3 advantageously has an oxygen content of at least 50 % by volume, preferably of at least 70 % by volume, more preferably of at least 80 % by volume and even more preferably of at least 87 % by volume.

The process can in particular be used for retrofitting a glass melting furnace or a feeder, in particular the feeder of a glass melting furnace.

The different optional features described with respect to the oxyburner also apply to the retrofitting process of the invention.

The present invention also relates to the use for heating a charge of an oxyburner or a furnace according to the invention and in particular of a glass melting furnace or of a feeder according to the invention.

Indeed, the oxyburner according to the present invention is particularly suited for use in the harsh environment which reigns in feeder of a glass melting furnace.

In a feeder, the heat provided by the burners serves to compensate the heat losses which occur during the transport of the molten glass through the feeder, thereby maintaining the molten glass at the desired temperature.

The burner in the feeder consequently operates at low power (low firing rates) in a high temperature environment with a high concentration of volatiles in the feeder atmosphere.

Furthermore, in order to obtain a substantially even temperature profile of the molten glass throughout the feeder, a significant number of burners are positioned along the feeder, thus requiring a compact burner construction.

The present invention provides a compact oxyburner which operates reliably at low power such a harsh environment.

According to a specific advantageous embodiment of this use, the functioning of one or more oxyburners according to the invention is controlled by the process described in WO-A-2004101453.

## Claims

1. Method of assembling an oxyburner using a refractory block (1) having on one side an inlet face (4) and on an opposite side an outlet face (5), the block defining:
i. a feed passage (6) into said block from said inlet face, said feed passage having an axis, and
ii. a burner chamber (7) having a narrow end opening (9) and an opposite wide end opening (10) in the outlet face (5), the burner chamber having a length Lt and comprising a frusto-conical section (20) terminating in the wide end opening (10),
the feed passage (6) leading into the narrow end opening (9) of the burner chamber,
the burner chamber (7) leading out of the block (1) at its wide end opening (10),
the method comprising the steps of mounting a fuel injector (2) in the feed passage (6) and mounting one or more oxidizer injectors (3) in the feed passage (6), wherein the frusto-conical section (20) has a cone axis substantially coinciding with the axis of the feed passage, and
the fuel injector (2) is mounted in the feed passage so as to extend into the burner chamber (7) over a length Lf, whereby 0≤ Lf ≤ 0.35 x Lt, and the one or more oxidizer injectors (3) are mounted in the feed passage (6) so as to extend into the burner chamber (7) over a length 0 ≤ Lo ≤ Lf, and
the fuel injector (2) and the one or more oxidizer injectors (3) are mounted in the feed passage (6) so that the fuel injector (2) is surrounded by the one or more oxidizer injectors (3), and
**characterized in that**: the frusto-conical section (20) of the burner chamber (7) has a cone angle α of 2° to 4°.

2. Method according to claim 1, whereby Lf > Lo.

3. Method according to any one of claims 1 and 2, whereby Lf ≤ 0.30 x Lt, preferably Lf ≤ 0.25 x Lt, more preferable Lf ≤ 0.20 x Lt.

4. Method according to any one of claims 1 to 3 whereby Lo ≤ 0.10 x Lt, preferably Lo ≤ 0.05 x Lt.

5. Method according to any one of claims 1 to 4 whereby at least one oxidizer injector (3) is mounted in the feed passage (6) so that said oxidizer injector surrounds the fuel injector(2), thereby creating an annular passage for injecting oxidizer into the burner chamber (7).

6. Method according to any one of claims 1 to 5, whereby the outlet face (5) comprises a facet (12) which forms an angle ß with the axis, whereby ß < 90°, preferably 30° ≤ ß ≤ 80°, more preferably 40° ≤ ß ≤ 60°.

7. Oxyburner obtainable by the method according to any one of claims 1 to 6.

8. Oxyburner according to claim 7, whereby the fuel injector (2) is connected to a source of a fuel, preferably gaseous fuel and more preferably selected from natural gas, methane, propane and butane, and whereby the one or more oxidizer injectors (3) are connected to a source of an oxidizer having an oxygen content of at least 50 % by volume, preferably of at least 70 % by volume, more preferably of at least 80 % by volume.

9. Furnace comprising one or more oxyburners according to any one of claims 7 and 8.

10. Glass melting furnace comprising one or more oxyburners according to any one of claims 7 and 8.

11. Glass feeder comprising one or more oxyburners according to any one of claims 7 and 8.

12. Process for retrofitting a combustion furnace having furnace walls (17) defining a combustion zone (15) and one or more refractory blocks (1) mounted in said refractory walls, said one or more combustion blocks having on one side an inlet face (4) and on an opposite side an outlet face (5) facing the combustion zone (15), the block defining:
i. a feed passage (6) into said block (1) from said inlet face (4), said feed passage having an axis, and
ii. a burner chamber (7) having a narrow end opening (9) and an opposite wide end opening (10) in the outlet face (5), the burner chamber having a surrounding wall (8) and a length Lt and comprising a frusto-conical section (20) terminating in the wide end opening (10), the frusto-conical section having a cone angle α of 2° to 4° and a cone axis substantially coinciding with the axis of the feed passage,
the feed passage (6) leading into the narrow end opening (9) and the burner chamber (7) leading out of the block (1) and into the combustion zone (15) at the wide end opening (10), and
the process comprising assembling an oxyburner in at least one of said refractory blocks (1) using the method according to any one of claims 1 to 6.

13. Process according to claim 12, further comprising connecting the fuel injector (2) to a source of a fuel, the fuel being preferably a gaseous fuel and more preferably selected from natural gas, methane, propane and butane, and connecting the one or more oxidizer injectors (3) to a source of an oxidizer having an oxygen content of at least 50 % by volume, preferably of at least 70% by volume, more preferably at least 80 % by volume.

14. Process according to any one of claims 12 and 13, whereby the furnace is a glass melting furnace.

15. Process according to any one of claims 12 to 14, whereby the combustion zone is situated in a feeder of said furnace.

## Patentansprüche

1. Verfahren zum Zusammenbauen eines Sauerstoffbrenners unter Einsatz eines feuerfesten Blocks (1) mit einer Einlassfläche (4) auf der einen Seite und einer Auslassfläche (5) auf einer gegenüberliegenden Seite, wobei der Block Folgendes definiert:
i. einen Zuführungsdurchlass (6) von der Einlassfläche in den Block, wobei der Zuführungsdurchlass eine Achse aufweist, und
ii. eine Brennkammer (7) mit einer schmalen Endöffnung (9) und einer gegenüberliegenden breiten Endöffnung (10) auf der Auslassfläche (5), wobei die Brennkammer eine Länge Lt aufweist und einen konischen kegelstumpfförmigen Abschnitt (20) aufweist, der in der breiten Endöffnung (10) endet,
wobei der Zuführungsdurchlass (6) in die schmale Endöffnung (9) der Brennkammer führt, wobei die Brennkammer (7) an ihrer breiten Endöffnung (10) aus dem Block (1) herausführt, wobei das Verfahren die folgenden Schritte umfasst: Anbringen eines Kraftstoffinjektors (2) im Zuführungsdurchlass (6) und Befestigen eines oder mehrerer Oxidationsmittelinjektoren (3) im Zuführungsdurchlass (6), wobei der konische kegelstumpfförmige Abschnitt (20) eine Kegelachse aufweist, die im Wesentlichen mit der Achse des Zuführungsdurchlasses übereinstimmt, und der Kraftstoffinjektor (2) derart im Zuführungsdurchlass angebracht ist, dass es sich um eine Länge Lf in die Brennkammer (7) hinein erstreckt, wobei 0 ≤ Lf ≤ 0,35 x Lt ist, und der eine oder die mehreren Oxitationsmittelinkektoren (3) derart im Zuführungsdurchlass (6) angebracht sind, dass sie sich um eine Länge 0 ≤ Lo ≤ Lf in die Brennkammer (7) erstrecken, und der Kraftstoffinjektor (2) und der eine oder die mehreren Oxitationsmittelinjektoren (3) derart im Zuführungsdurchlass (6) angebracht sind, dass der Kraftstoffinjektor (2) von dem einen oder den mehreren Oxidationsmittelinjektoren (3) umgeben ist, und
**dadurch gekennzeichnet, dass** der konische kegelstumpfförmige Abschnitt (20) der Brennkammer (7) einen Kegelwinkel α von 2° bis 4° aufweist.

2. Verfahren nach Anspruch 1, wobei Lf > Lo ist.

3. Verfahren nach einem der Ansprüche 1 und 2, wobei Lf ≤ 0,30 x Lt ist, vorzugsweise Lf ≤ 0,25 x Lt und stärker bevorzugt Lf ≤ 0,20 x Lt.

4. Verfahren nach einem der Ansprüche 1 bis 3, wobei Lo ≤ 0,10 x Lt ist, vorzugsweise Lo ≤ 0,05 x Lt.

5. Verfahren nach einem der Ansprüche 1 bis 4, wobei wenigstens ein Oxidationsmittelinjektor (3) derart im Zuführungsdurchlass (6) angebracht ist, dass der Oxidationsmittelinjektor den Kraftstoffeininjektor (2) umgibt und so einen ringförmigen Durchlass zum Einspeisen von Oxidationsmittel in die Brennkammer (7) ausbildet.

6. Verfahren nach einem der Ansprüche 1 bis 5, wobei die Auslassfläche (5) eine Facette (12) umfasst, die in einem Winkel β zur Achse ausgerichtet ist, wobei β < 90° ist, vorzugsweise 30° ≤ β ≤ 80°, stärker bevorzugt 40° ≤ β ≤ 60°.

7. Sauerstoffbrenner, der durch das Verfahren nach einem der Ansprüche 1 bis 6 erstellbar ist.

8. Sauerstoffbrenner nach Anspruch 7, wobei der Kraftstoffinjektor (2) mit einer Quelle für Kraftstoff verbunden ist, vorzugsweise gasförmigem Kraftstoff und stärker bevorzugt ausgewählt aus Erdgas, Methan, Propan und Butan, und wobei der eine oder die mehreren Oxidationsmittelinjektoren (3) mit einer Quelle für ein Oxidationsmittel verbunden sind, welches einen Sauerstoffgehalt von wenigstens 50 Vol.-% aufweist, vorzugsweise wenigstens 70 Vol.-%, stärker bevorzugt wenigstens 80 Vol.-%.

9. Ofen, umfassend einen oder mehrere Sauerstoffbrenner nach einem der Ansprüche 7 und 8.

10. Glasschmelzofen, umfassend einen oder mehrere Sauerstoffbrenner nach einem der Ansprüche 7 und 8.

11. Glasspeiser, umfassend einen oder mehrere Sauerstoffbrenner nach einem der Ansprüche 7 und 8.

12. Vorgang zum Nachrüsten eines Verbrennungsofens mit Ofenwänden (17), die einen Verbrennungsbereich (15) definieren und mit einem oder mehreren feuerfesten Blöcken (1), die in den feuerfesten Wänden angebracht sind, wobei der eine oder die mehreren feuerfesten Blöcke auf der einen Seite eine Einlassfläche (4) und an der gegenüberliegenden Seite eine Auslassfläche (5), die zum Verbrennungsbereich (15) hin gerichtet ist, aufweisen, wobei der Block Folgendes definiert:
i. einen Zuführungsdurchlass (6) von der Einlassfläche (4) in den Block (1), wobei der Zuführungsdurchlass eine Achse aufweist, und
ii. eine Brennkammer (7) mit einer schmalen Endöffnung (9) und einer gegenüber angeordneten breiten Endöffnung (10) in der Auslassfläche (5), wobei die Brennkammer eine umgebende Wand (8) und eine Länge Lt hat und einen konischen kegelstumpfförmigen Abschnitt (20) aufweist, der in der breiten Endöffnung (10) endet, wobei der konische kegelstumpfförmige Abschnitt einen Kegelwinkel α von 2° bis 4° und eine Kegelachse aufweist, die im Wesentlichen mit der Achse des Zuführungsdurchlasses übereinstimmt,
wobei der Zuführungsdurchlass (6) in die schmale Endöffnung (9) führt und die Brennkammer (7) an der breiten Endöffnung (10) aus dem Block (1) und in den Verbrennungsbereich (15) führt, und
der Vorgang das Zusammenbauen eines Sauerstoffbrenners in wenigstens einem der feuerfesten Blöcke (1) unter Einsatz des Verfahrens nach einem der Ansprüche 1 bis 6 umfasst.

13. Vorgang nach Anspruch 12, ferner umfassend das Verbinden des Kraftstoffinjektors (2) mit einer Quelle für Kraftstoff, vorzugsweise gasförmigem Kraftstoff, stärker bevorzugt ausgewählt aus Erdgas, Methan, Propan und Butan, und das Verbinden des einen oder der mehreren Oxidationsmittelinjektoren (3) mit einer Quelle für Oxidationsmittel, welches einen Sauerstoffgehalt von wenigstens 50 Vol.-% aufweist, vorzugsweise wenigstens 70 Vol.-%, stärker bevorzugt wenigstens 80 Vol.-%.

14. Vorgang nach einem der Ansprüche 12 und 13, wobei der Ofen ein Glasschmelzofen ist.

15. Vorgang nach einem der Ansprüche 12 bis 14, wobei der Verbrennungsbereich in einem Speiser des Ofens angeordnet ist.

## Revendications

1. Procédé d'assemblage d'un oxybrûleur à l'aide d'un bloc réfractaire (1) ayant sur un côté une face d'admission (4) et sur un côté opposé une face de refoulement (5), le bloc définissant :
i. un passage d'alimentation (6) dans ledit bloc depuis ladite face d'admission, ledit passage d'alimentation ayant un axe, et
ii. une chambre de brûleur (7) ayant une ouverture d'extrémité étroite (9) et une ouverture d'extrémité large opposée (10) dans la face de refoulement (5), la chambre de brûleur ayant une longueur Lt et comprenant une section tronconique (20) se terminant dans l'ouverture d'extrémité large (10),
le passage d'alimentation (6) débouchant sur l'ouverture d'extrémité étroite (9) de la chambre de brûleur, la chambre de brûleur (7) sortant du bloc (1) au niveau de son ouverture d'extrémité large (10), le procédé comprenant les étapes de montage d'un injecteur de combustible (2) dans le passage d'alimentation (6) et de montage d'un ou plusieurs injecteurs de comburant (3) dans le passage d'alimentation (6), dans lequel
la section tronconique (20) a un axe de cône coïncidant sensiblement avec l'axe du passage d'alimentation, et l'injecteur de combustible (2) est monté dans le passage d'alimentation de façon à s'étendre dans la chambre de brûleur (7) sur une longueur Lf, selon lequel 0 ≤ Lf ≤ 0,35 x Lt, et le ou les injecteurs de comburant (3) sont montés dans le passage d'alimentation (6) de façon à s'étendre dans la chambre de brûleur (7) sur une longueur 0 ≤ Lo ≤ Lf, et
l'injecteur de combustible (2) et le ou les injecteurs de comburant (3) sont montés dans le passage d'alimentation (6) de sorte que l'injecteur de combustible (2) soit entouré du ou des injecteurs de comburant (3), et
**caractérisé en ce que** :
la section tronconique (20) de la chambre de brûleur (7) a un angle de cône α de 2° à 4°.

2. Procédé selon la revendication 1, selon lequel Lf > Lo.

3. Procédé selon l'une quelconque des revendications 1 et 2, selon lequel Lf ≤ 0,30 x Lt, de préférence Lf ≤ 0,25 x Lt, de manière davantage préférée Lf ≤ 0,20 x Lt.

4. Procédé selon l'une quelconque des revendications 1 à 3, selon lequel Lo ≤ 0,10 x Lt, de préférence Lo ≤ 0,05 x Lt.

5. Procédé selon l'une quelconque des revendications 1 à 4, selon lequel au moins un injecteur de comburant (3) est monté dans le passage d'alimentation (6) de sorte que ledit injecteur de comburant entoure l'injecteur de combustible (2), créant ainsi un passage annulaire permettant d'injecter un comburant dans la chambre de brûleur (7).

6. Procédé selon l'une quelconque des revendications 1 à 5, selon lequel la face de refoulement (5) comprend une facette (12) qui forme un angle β avec l'axe, selon lequel β < 90°, de préférence 30° ≤ β ≤ 80°, de manière davantage préférée 40° ≤ β ≤ 60°.

7. Oxybrûleur pouvant être obtenu par le procédé selon l'une quelconque des revendications 1 à 6.

8. Oxybrûleur selon la revendication 7, selon lequel l'injecteur de combustible (2) est raccordé à une source de combustible, de préférence un combustible gazeux et de manière davantage préférée choisi parmi le gaz naturel, le méthane, le propane et le butane, et selon lequel le ou les injecteurs de comburant (3) sont raccordés à une source de comburant ayant une teneur en oxygène d'au moins 50 % en volume, de préférence d'au moins 70 % en volume, de manière davantage préférée d'au moins 80 % en volume.

9. Four comprenant un ou plusieurs oxybrûleurs selon l'une quelconque des revendications 7 et 8.

10. Four de fusion du verre comprenant un ou plusieurs oxybrûleurs selon l'une quelconque des revendications 7 et 8.

11. Distributeur de verre comprenant un ou plusieurs oxybrûleurs selon l'une quelconque des revendications 7 et 8.

12. Processus de rétro-installation d'un four de combustion ayant des parois de four (17) définissant une zone de combustion (15) et un ou plusieurs blocs réfractaires (1) montés dans lesdites parois réfractaires, ledit ou lesdits blocs de combustion ayant sur un côté une face d'admission (4) et sur un côté opposé une face de refoulement (5) en regard de la zone de combustion (15), le bloc définissant :
i. un passage d'alimentation (6) dans ledit bloc (1) depuis ladite face d'admission (4), ledit passage d'alimentation ayant un axe, et
ii. une chambre de brûleur (7) ayant une ouverture d'extrémité étroite (9) et une ouverture d'extrémité large opposée (10) dans la face de refoulement (5), la chambre de brûleur ayant une paroi environnante (8) et une longueur Lt et comprenant une section tronconique (20) se terminant dans l'ouverture d'extrémité large (10), la section tronconique ayant un angle de cône α de 2° à 4° et un axe de cône coïncidant sensiblement avec l'axe du passage d'alimentation,
le passage d'alimentation (6) débouchant sur l'ouverture d'extrémité étroite (9) et la chambre de brûleur (7) débouchant hors du bloc (1) et dans la zone de combustion (15) au niveau de l'ouverture d'extrémité large (10), et
le processus comprenant l'assemblage d'un oxybrûleur dans au moins l'un desdits blocs réfractaires (1) à l'aide du procédé selon l'une quelconque des revendications 1 à 6.

13. Processus selon la revendication 12, comprenant en outre le raccordement de l'injecteur de combustible (2) à une source de combustible, le combustible étant de préférence un combustible gazeux et de manière davantage préférée choisi parmi le gaz naturel, le méthane, le propane et le butane, et le raccordement du ou des injecteurs de comburant (3) à une source de comburant ayant une teneur en oxygène d'au moins 50 % en volume, de préférence d'au moins 70 % en volume, de manière davantage préférée d'au moins 80 % en volume.

14. Processus selon l'une quelconque des revendications 12 et 13, selon lequel le four est un four de fusion du verre.

15. Processus selon l'une quelconque des revendications 12 à 14, selon lequel la zone de combustion est située dans un distributeur dudit four.
